# EUROPÄISCHE PATENTANMELDUNG

(11) **EP 4 840 830 A1**
(43) Veröffentlichungstag der Anmeldung: **18.11.2026**
(21) Anmeldenummer: 25176883.4
(22) Anmeldetag: 16.05.2025
(51) Int. Cl.: C03C 3/091, C03C 3/093, C03C 17/36, C03C 21/00, C03C 23/00

(54) **FLACHGLÄSER MIT VERBESSERTER IONENTAUSCHBARKEIT UND DEREN VERWENDUNG**

(71) Anmelder: SCHOTT AG, 55122 Mainz (DE)
(72) Erfinder: LEUGNER, Sebastian, 55122 Mainz (DE); BAI, Xiaofei, 55122 Mainz (DE); GÖNÜLLÜ, Yakup, 55122 Mainz (DE); PEUCHERT, Ulrich, 55122 Mainz (DE); LEUKEL, Sebastian, 55122 Mainz (DE); WILDE, Patrick, 55122 Mainz (DE); RUDIGIER-VOIGT, Eveline, 55122 Mainz (DE)
(74) Vertreter: Schott Corporate IP

(57) **Zusammenfassung**

Die Erfindung betrifft ein Flachglas aus einem Mehrkomponentenglas, welches insbesondere geeignet zur Herstellung eines elektronischen Bauteils geeignet ist. Das Flachglas umfasst zwei gegenüberliegende Seitenflächen sowie einen Bulkbereich. Gemäß einer Ausführungsform umfasst das das Flachglas in zumindest einem oberflächennahen Bereich, vorzugsweise in einem Bereich bis zu einer Tiefe von zumindest 25 nm eine Konzentrationsüberhöhung von Zink oder Zinn gegenüber dem Bulkbereich. Vorzugsweise ist in diesem Bereich die Konzentration von Zink oder Zinn gegenüber dem Bulkbereich um zumindest 50% erhöht. Alternativ oder zusätzlich weist das Flachglas nach Behandlung mit einer Salzschmelze umfassend 70 Gew.-% ZnSO₄x7H₂O und 30 Gew.-% K₂SO₄ bei 580°C für 8 h für Zinkionen einen 90% Point to Point-Wert (PtP) > 40 nm auf.

## Beschreibung

Die Erfindung betrifft ein Flachglas, das besonders zur Herstellung eines elektronischen Bauteils geeignet ist, sowie ein Verfahren zur Herstellung eines strukturierten, metallisch beschichteten Flachglases. Insbesondere betrifft die Erfindung ein Flachglas, welches zur Herstellung elektronischer Bauteile mit durch das Glas durchgehenden Durchkontaktierungen (TGV) geeignet ist. Des Weiteren betrifft die Erfindung die Verwendung des entsprechenden Flachglases bei der Herstellung eines elektronischen Bauteils sowie ein Verfahren zur Herstellung eines strukturierten, mit einer metallischen Beschichtung versehenen Flachglases.

### Stand der Technik

Es besteht zunehmend Bedarf an Materialien, die sich als Substrate für den Aufbau von elektronischen Bauteilen bzw. deren Komponenten für die Verbindungstechnik eignen. Bei diesen Bauteilen kann es sich beispielsweise um sog. "packaging substrates" oder Interposer handeln.

Aufgrund ihrer vorteilhaften mechanischen und elektronischen Eigenschaften besteht zunehmendes Interesse, glasbasierte Substrate, sog. "glass cores" Substrate, für die Herstellung von elektronischen Bauteilen wie beispielsweise Halbleiter Packaging zu verwenden. Zur Herstellung von Glas-Substraten mit Durchkontaktierungen, auch als TGV-Substrate bezeichnet, sind neben den dielektrischen Eigenschaften der Materialien die Prozessierbarkeit der eingesetzten Gläser beim Strukturieren relevant. TGV-Substrate weisen eine große Anzahl von Löchern in Form von Kanälen auf, die für eine vertikale elektrische Verbindung durch das Substrat sorgen. Die im Substrat enthaltenen Durchkontaktierungen müssen hierbei eine definierte Geometrie und Oberflächenbeschaffenheit der Wandungen aufweisen.

Ein geeignetes Substratmaterial zur Herstellung von TGV-Substraten, beispielsweise in Form eines Flachglases, muss neben guten dielektrischen Eigenschaften auch eine gute Strukturierbarkeit aufweisen. Diese äußert sich insbesondere in einer guten Ätzbarkeit des Substratmaterials bzw. des Flachglases. Des Weiteren müssen die Wandungen der erhaltenen Strukturen so beschaffen sein, dass eine gute Metallisierbarkeit gewährleistet ist. Unter einer guten Metallisierbarkeit wird insbesondere verstanden, dass sich zumindest in Teilbereichen des Glases in einem Metallabscheidungsprozess eine metallische Beschichtung gezielt abscheiden lässt und die abgeschiedene Beschichtung an der Glasoberfläche anhaftet.

Bei der Herstellung von Through-Glas-Vias (TGV) werden die Flachgläser so strukturiert, dass eine Vielzahl von Löchern in genau definierter Lage und Form als Durchführungen entstehen. Im nächsten Schritt werden diese TGVs metallisiert, so dass elektrische Kontakte von Ober- zu Unterseite des Panels entstehen. Die Löcher werden dabei entweder vollständig gefüllt oder die Seitenränder homogen beschichtet. Im Anschluss werden weitere sog. Umverteilungsschichten (sog. *re-distribution layer*) aufgebracht, die das Bauteil komplettieren.

Solche Metallisierungen können auf unterschiedliche Weisen realisiert werden. Um genügend Strom führen zu können und gleichzeitig eine ausreichende Haftung zu gewährleisten, werden in der Regel sog. Saatschichten (*seed layer*) auf das Glas aufgebracht, die im Anschluss galvanisch verstärkt werden. Dabei können die Saatschichten nasschemisch oder über Vakuumverfahren aufgebracht werden und der galvanische Prozess von stromlos bis klassisch verlaufen. Zusätzlich werden sowohl die Saatschichten als auch die galvanischen Schichten in der Regel thermisch behandelt, um möglichst dichte Schichten mit hoher Leitfähigkeit zu realisieren.

Verschiedene Untersuchungen zeigen, dass es häufig zu Haftungsproblemen kommt. In der US 10487404 B2 wird daher als Haftvermittlerschicht eine zinkoxidhaltige Beschichtung zwischen der Glasoberfläche und der metallischen Beschichtung aufgebracht. Hierbei handelt es sich bei dem Glas um ein Quarzglas. Die Zinkoxidbeschichtung weist eine poröse Oberfläche auf, an der die darauf abgeschiedene Kupferschicht gut anhaftet. Gleichzeitig bildet sich an der Grenzfläche zwischen Quarzglas und Zinkoxidschicht eine ternäre Phase aus Silizium, Zink und Sauerstoff, die auf die Diffusion des Siliziums aus dem Quarzglas in die Zinkoxidschicht zurückzuführen ist. Diese ternäre Phase gewährleistet eine gute Haftung zwischen der Glasoberfläche und der Zinkoxidschicht.

Bei Mehrkomponentengläsern, die neben Siliziumdioxid weitere Netzwerkbildner enthalten, findet eine Diffusion des Siliziums in die Zinkoxidschicht nicht oder nicht im ausreichenden Maße statt. Daher ist die Anhaftung der Zinkoxidschicht an die Glasoberfläche schwächer, was sich nachteilig auf die mechanische Stabilität der gesamten Beschichtung auf dem Glassubstrat auswirkt. Dies hat zur Folge, dass viele Mehrkomponentengläser schlecht metallisierbar sind bzw. eine abgeschiedenen Metallbeschichtung zu leicht von der Glasoberfläche abgelöst werden kann, so dass ein entsprechend beschichtetes Glassubstrat nicht zur Verwendung in elektronischen Bauteilen eingesetzt werden kann.

Es besteht daher der Bedarf an Gläsern, die sich leicht strukturieren lassen und neben vorteilhaften dielektrischen Eigenschaften eine gute Anhaftung von metallischen Beschichtungen ermöglichen.

### Aufgabe der Erfindung

Eine Aufgabe der Erfindung liegt in der Bereitstellung eines entsprechenden Mehrkomponentenglases mit guter Metallisierbarkeit sowie dessen Verwendung bei der Herstellung eines elektronischen Bauteils. Eine weitere Aufgabe liegt in der Bereitstellung eines mit einer metallischen Beschichtung beschichteten Glassubstrates und der Verwendung eines entsprechend beschichteten Glassubstrates in einem elektronischen Bauteil.

### Beschreibung der Erfindung

Die Aufgabe der Erfindung wird bereits durch den Gegenstand der unabhängigen Ansprüche gelöst. Spezielle, vorteilhafte und bevorzugte Ausgestaltungen finden sich in den abhängigen Ansprüchen.

Die Erfindung betrifft ein Flachglas aus einem Mehrkomponentenglas. Unter einem Flachglas wird im Sinne der Offenbarung ein Glaskörper verstanden, dessen geometrische Abmessung in einer Raumrichtung mindestens eine Größenordnung geringer ist als in den beiden anderen Raumrichtungen. Vereinfacht gesprochen ist also die Dicke des Glaskörpers also mindestens eine Größenordnung geringer als dessen Länge und Breite. Flachgläser können beispielsweise bandförmig ausgestaltet sein, sodass also ihre Länge nochmals deutlich größer ist als ihre Breite, oder Länge und Breite können in etwa dieselbe Größenordnung aufweisen, sodass das Flachglas mithin als Scheibe vorliegt. Insbesondere wird unter einem Flachglas ein Glas verstanden, welches aus dem Herstellungsprozess selbst bereits als scheiben- oder bandförmig ausgebildeter Körper erhalten wird.

Das Flachglas weist zwei gegenüberliegende Seitenflächen, zwei oberflächennahe Bereiche sowie einen Bulkbereich auf. Unter einem oberflächennahen Bereich wird im Sinne der Offenbarung insbesondere der Bereich des Glases von einer Seitenfläche bis zu einer Tiefe von zumindest 20 nm verstanden. Der Bulkbereich bildet den Mittenbereich des Flachglases.

Das Flachglas gewährleistet eine gute Anhaftung einer zinkoxid- und/oder zinnoxidhaltigen Beschichtung auf der Oberfläche, indem es die Ausbildung einer Interdiffusionsschicht in zumindest einem oberflächennahen Bereich ermöglicht, wenn die entsprechende Oberfläche des Flachglases mit einem zinkoxid- oder zinnoxidhaltigen Medium, beispielsweise einer Lösung oder einer Beschichtung in Kontakt kommt. Hierbei wird unter einer Interdiffusionsschicht insbesondere ein Bereich des Flachglases verstanden, in der ein Austausch von Erdalkali- und/oder Alkalimetalloxidionen gegen Zinn- und/oder Zinkionen stattfindet. So können beispielsweise Zink- oder Zinnionen aus einer zinkoxid- oder zinnoxidhaltigen Beschichtung von der Glasoberfläche in das Glas diffundieren. Durch die so gebildete Interdiffusionsschicht weist das Flachglas und die darauf abgeschiedene zinnoxid- oder zinkoxidhaltige Beschichtung nicht nur eine formschlüssige Verbindung auf. Vielmehr besteht durch die Interdiffusionsschicht auch eine stoffschlüssige Verbindung zwischen Glas und zinnoxid- oder zinkoxidhaltiger Beschichtung. Dies wirkt sich vorteilhaft auf die mechanische Stabilität der Beschichtung, insbesondere auf deren Anhaftung auf dem Glassubstrat aus.

Die Bildung einer entsprechenden Interdiffusionsschicht wird durch die spezifischen Glaseigenschaften des erfindungsgemäßen Flachglases ermöglicht. Hierbei hat sich herausgestellt, dass sowohl eine hohe Ionendiffusion als auch eine hohe lonenmobilität im Glas vorteilhaft auf die Ausbildung einer Interdiffusionsschicht in den oberflächennahen Bereichen des Glases ermöglicht.

Die Erfinder haben herausgefunden, dass die Fähigkeit eines Flachglases, mit einer zinkoxid- und/oder zinnoxidhaltigen Beschichtung eine entsprechende Interdiffusionsschicht zu bilden und so eine gute Anhaftung der Beschichtung zu ermöglichen, mit der lonenaustauschbarkeit beweglicher einfach oder zweifachgeladener Ionen, insbesondere von Alkali- und Erdalkalimetallionen, im Glas korreliert. Unter dem Begriff "Ionenaustauschbarkeit" wird im Rahmen der vorliegenden Offenbarung insbesondere verstanden, dass das Glas einem Ionenaustauschprozess, insbesondere einem Ionenaustauschprozess, bei dem Kationen im Glas gegen Zinn- oder Zinkionen ausgetauscht werden, zugänglich ist. In einem solchen Prozess werden im oberflächennahen Bereich des Flachglases beispielsweise Alkali- und/oder Erdalkalimetallionen gegen Zinkionen ausgetauscht.

Die lonenaustauschbarkeit wird dadurch ermittelt, indem das Flachglas für einen Zeitraum von 8 Stunden in eine zinkhaltige Salzschmelze bei einer Temperatur von 580 °C gegeben wird. Die Salzschmelze enthält 70 Gew.-% ZnSO₄x7H₂O und 30 Gew.-% K₂SO₄. Nach einem Reinigungsschritt wird mit Hilfe der ToF-SIMS- Massenspektrometrie die Austauschtiefe der Zinkionen im Glas bestimmt. Hierzu wird der 90% Point-to-Point-Wert (PtP-Wert) anhand der Intensitäten im ToF-SIMS-Spektrum bestimmt. Bei dem 90% Point-to-Point Wert handelt es sich um die Glastiefe gemessen von der Glasoberfläche, bei dem die Zinkkonzentration gegenüber der Zinkionenkonzentration an der Glasoberfläche um 90% abgenommen hat. Der 50% Point-to-Point-Wert definiert entsprechend die Glastiefe gemessen von der Glasoberfläche, bei denen die Zinkkonzentration noch 50% der Zinkkonzentration an der Glasoberfläche beträgt. Gläser mit hohen Point-to-Point-Werten sind dabei in der Lage, bei einem Beschichtungsprozess mit zinnoxid- oder zinkoxidhaltigen Beschichtungen Interdiffusionsschichten zu bilden, so dass die Beschichtung entsprechend gut auf der Glasoberfläche haftet.

Gemäß einer Variante der Erfindung weist das Flachglas für Zinkionen einen 90% Point to Point-Wert (PtP-Wert) von mehr als 40 nm oder sogar von mehr als 50 nm auf. Eine Ausführungsform sieht vor, dass das Flachglas einen 50% Point-to-Point-Wert von mehr als 25 nm oder sogar mehr als 35 nm aufweist. Gläser mit diesen Point-to-Point-Werten ermöglichen eine gute lonenaustauschbarkeit mit zweiwertigen Kationen, insbesondere mit Zink- oder Zinnionen. Insbesondere bei diesen Flachgläsern kann eine entsprechende Interdiffusionsschicht, in der das Flachglas eine erhöhte Konzentration an Zink- und/oder Zinnionen gegenüber der Zusammensetzung im Bulkbereich aufweist, durch einen Ionenaustauschprozess analog zum chemischen Vorspannen in Lösung oder Schmelze gebildet werden. Eine zinn- und/oder zinkhaltige Interdiffusionsschicht kann auch während des Beschichtungsprozesses mit einer zinnoxid- und/oder zinkoxidhaltigen Beschichtung erhalten werden. Hier kann es beispielsweise während des Temperungsschrittes nach dem Aufbringen der zinnoxid- und/oder zinkoxidhaltigen Beschichtung bei Temperaturen von bis zu 500 °C zu einer Diffusion der Zinn- und/oder Zinkionen in die oberflächennahen Bereiche des Flachglases und somit zur Bildung einer Interdiffusionsschicht kommen.

Alternativ oder zusätzlich zum PtP-Wert ist in einer Variante der Erfindung vorgesehen, dass das Flachglas in zumindest einem oberflächennahen Bereich gegenüber dem Bulkbereich eine Konzentrationsüberhöhung von Zinn und/oder Zink aufweist. Der Gehalt an Zinn- und/oder Zinkionen ist somit in zumindest einem oberflächennahen Bereich, vorzugsweise in einem Bereich bis zumindest einer Tiefe von 40 nm, größer als im Bulkbereich des Glases. Ein entsprechendes Flachglas weist somit für Zink- und/oder Zinnionen ein Konzentrationsprofil auf, bei dem die Konzentration der Zinn- und/oder Zinkionen ausgehend von der Oberfläche des Glases in Richtung der Glasmitte bzw. dem Bulkbereich des Glases abnimmt. Unter einem Konzentrationsprofil wird im Rahmen der vorliegenden Offenbarung der Auftrag der Zinn- bzw. Zinkkonzentration über die Dicke des Flachglases in einem Diagramm verstanden.

Sofern im Rahmen der vorliegenden Offenbarung auf die Konzentration von Zink und/oder Zinn abgestellt wird, wird darunter die Konzentration des entsprechenden Metalls im Glas verstanden, unabhängig von der entsprechenden Oxidationsstufe des Metalls, wobei ebenfalls verstanden wird, dass in einem oxidischen Glas, entsprechend also auch in einem Glas bzw. Flachglas nach Ausführungsformen, die entsprechenden Metalle als Ionen vorliegen. Insofern werden die Begriffe der Zinnkonzentration bzw. Zinnionenkonzentration im Rahmen der vorliegenden Offenbarung als Synonyme verwendet, sofern sich nicht ausnahmsweise explizit anderes ergeben sollte. Diese Ausführungen gelten in entsprechender Weise auch für Zink.

Bevorzugt weist das Flachglas in zumindest einem oberflächennahen Bereich, besonders bevorzugt in zumindest einem Bereich ausgehend von der Glasoberfläche bis zu einer Tiefe von zumindest 25 nm gegenüber dem Bulkbereich eine Konzentrationsüberhöhung von Zinn- und/oder Zinkionen von zumindest 50% auf. Die Konzentrationsüberhöhung kann hierbei quantitativ mittels TOF-SIMS-Spektrometrie ermittelt werden.

Gemäß einer Ausführungsform handelt es sich bei dem Flachglas um ein ionengetauschtes Flachglas, bei dem Alkali- und/oder Erdalkalimetallionen gegen Zinn- und/oder Zinkionen ausgetauscht wurden. Vorzugsweise weist das ionengetauschte Flachglas eine Austauschtiefe DOL von zumindest 40 nm, insbesondere von zumindest 60 nm und/oder im Bereich von 40 bis 100 nm auf. Die Austauschtiefe kann somit über den definierten oberflächennahen Bereich von 20 nm gemessen von der Glasoberfläche hinaus gehen.

Alternativ oder zusätzlich können die erfindungsgemäßen Gläser über den Gehalt an SiO₂, Al₂O₃ sowie der Alkalimetalloxide und/oder Erdalkalimetalloxide beschrieben werden. Durch die Kombination dieser Komponenten kann ein Glas mit einer guten Ionen tauschbarkeit erhalten werden, welches zudem vorteilhafte Eigenschaften wie beispielsweise eine gute chemische Beständigkeit, eine ausreichend hohemechanische Festigkeit sowie vorteilhafte dielektrische Eigenschaften aufweist.

So weist das Flachglas vorzugsweise im Bulkbereich einen Gesamtgehalt an SiO₂ von höchstens 75 Gew.-%, bevorzugt höchstens 65 Gew.-% auf. Die Begrenzung des Anteils SiO₂ auf maximal 75 Gew.-% führt zur Ausbildung eines Glasnetzwerkes, welches ein gute lonenmobilität und Ionendiffusion ermöglicht. In Kombination mit einem relativ hohen Gehalt an Alkali- und/oder Erdalkalimetalloxiden führt dies zu einer guten Ionentauschbarkeit des Glases. Eine Ausführungsform sieht vor, dass das Flachglas im Bulkbereich einen Anteil an SiO₂ im Bereich von 55 bis 75 Gew.-%, vorzugsweise im Bereich von 58 bis 65 Gew.-% aufweist.

Bei dem Glas handelt es sich um ein Mehrkomponentenglas, d.h. neben SiO₂ enthält das Glas zumindest einen weiteren Netzwerkbildner. Netzwerkbildner werden hierbei im Sinne von Zachariasen verstanden, umfassen also Kationen, welche überwiegend die Koordinationszahl 3 oder 4 aufweisen; insbesondere handelt es sich hierbei um die Kationen der Elemente Si, B, P, Ge, As. Netzwerkbildner stehen hierbei im Gegensatz zu Netzwerkwandlern wie beispielsweise Na, K, Ca, Ba mit üblichen Koordinationszahlen von 6 und mehr, sowie Zwischenoxiden wie Al, Mg, Zn, welche vorwiegend Koordinati- onsszahlen von 4 bis 6 aufweisen. Insbesondere enthält das Flachglas als Netzwerkbildner sowohl SiO₂ als auch B₂O₃.

Gemäß einer Ausführungsform beträgt der Gesamtanteil an Netzwerkbildnern höchstens 80 Gew.-%, bevorzugt höchstens 75 Gew.-%. Ein Mindestgehalt an Netzwerkbildnern von zumindest 65 Gew.-% hat sich hierbei als vorteilhaft herausgestellt, da auf diese Weise ein stabiles, dreidimensional vernetztes Netzwerk erhalten wird. Zudem werden neben hohen lonenmobilitäten und Ionendiffusionen im Flachglas gleichzeitig gute dielektrische Eigenschaften ermöglicht.

So weist das Flachglas gemäß einer Ausführungsform eine Dielektrizitätskonstante ε von kleiner 4,3 auf.

Um eine gute lonenmobilität und Ionendiffusion im Glas sicherzustellen und einen Ionenaustausch zu ermöglichen, enthält das Glas als Netzwerkwandler Alkalimetalloxide und/oder Erdalkalimetalloxide. So ist ein Glasnetzwerk umso starrer, je weniger Trennstellensauerstoffe es aufweist. Durch die Zugabe von Alkali- und/oder Erdalkalimetalloxiden zu den Netzwerkbildnern werden jedoch Trennstellensauerstoffe erzeugt. Zudem wird durch die Zugabe von Alkali- und/oder Erdalkalimetalloxiden der Gehalt an diffusionsfähigen Ionen im Glas erhöht. Hierbei ermöglichen die Alkali- und Erdalkalimetalloxide einen Ionenaustausch mit Zink- und/oder Zinnionen und ermöglichen so die Bildung einer Interdiffusionsschicht.

Gläser mit guten lonentauschbarkeiten können insbesondere erhalten werden, wenn der Gesamtanteil an Alkalimetalloxiden und/oder Erdalkalimetalloxiden dabei zumindest 1,6 Gew.-%, bevorzugt zumindest 2 Gew.-%, mehr bevorzugt zumindest 5 Gew.- %, besonders bevorzugt zumindest 8 Gew.-% beträgt. Insbesondere liegt der Gesamtgehalt an Alkalimetalloxiden und Erdalkalimetalloxiden im Bereich von 1,6 bis 15 Gew.- %, bevorzugt im Bereich von 8 bis 15 Gew.-%.

Neben den Netzwerkbildnern enthält das Flachglas vorzugsweise das Zwischenoxid Al₂O₃. Durch die Zugabe von Al₂O₃ kann die Zahl der Trennstellensauerstoffe verringert werden. Durch Zugabe von Al₂O₃ werden diese Trennstellen wieder kompensiert, was sich vorteilhaft auf die lonenmobilität der Alkalimetallionen im Glas auswirkt. Zudem kann durch die Zugabe von Al₂O₃ auch bei hohen Gehalten an Alkali- und/oder Erdalkalimetalloxiden ein ausreichend starres Netzwerk erhalten werden kann. Allerdings verringert die Zugabe von Al₂O₃ die chemische Beständigkeit des Glases. Vorzugsweise enthält das Glas daher höchstens 20 Gew.-% Al₂O₃. Ein Gehalt an Al₂O₃ im Bereich von 0,8 bis 20 Gew.-% hat sich als besonders vorteilhaft herausgestellt.

Es hat sich als besonders vorteilhat herausgestellt, wenn für das Verhältnis von SiO₂ und Al₂O₃ zum Gesamtgehalt an Alkalimetalloxiden M₂O und Erdalkalimetalloxiden MO gilt: $\left(m\left({SiO}_{2}\right)+m\left({Al}_{2}{O}_{3}\right)\right) / \left(m\left(MO\right)+m\left({M}_{2}O\right)\right) \geq 4 ,$ bevorzugt 4 bis 8.

Gemäß einer Ausführungsform weist das Flachglas im Bulkbereich einen Gesamtgehalt an Erdalkalimetalloxiden von zumindest 3 Gew.-%, bevorzugt zumindest 5 Gew.-% auf. Der hohe Gehalt an Erdalkalimetalloxiden, insbesondere in Kombination mit einem maximalen Gehalt an Netzwerkbildnern von 80 Gew.-%, ermöglicht einen effektiven Ionenaustausch mit Zink- und/oder Zinnionen und fördert somit die Bildung einer Interdiffusionsschicht unter entsprechenden Prozessbedingungen. Vorzugsweise enthält das Glas Magnesiumoxid, Kalziumoxid, Strontiumoxid und/oder Bariumoxid. Vorzugsweise liegt der Gehalt an Erdalkalimetalloxiden im Bulkbereich des Flachglases im Bereich von 4 bis 15 Gew.-%, insbesondere im Bereich von 8 bis 12 Gew.-%. Die Begrenzung des Gesamtgehalts an Erdalkalimetalloxiden auf höchstens 15 Gew.-%, insbesondere auf höchstens 12 Gew.-% ermöglicht eine gute Strukturierbarkeit des Flachglases. Diese äußert sich insbesondere in einer guten Ätzbarkeit des Substratmaterials bzw. des Flachglases.

Unter einer guten Ätzbarkeit wird insbesondere verstanden, dass der Ätzprozess mit hohen Ätzraten und möglichst ohne Niederschlagsbildung durch die ausgelösten Glasbestandteile erfolgt. Des Weiteren müssen die Wandungen der mittels Ätzprozess erhaltenen Strukturen so beschaffen sein, dass eine gute Metallisierbarkeit gewährleistet ist. Unter einer guten Metallisierbarkeit wird insbesondere verstanden, dass sich zumindest in Teilbereichen des Glases in einem Metallabscheidungsprozess eine metallische Beschichtung gezielt abscheiden lässt und die abgeschiedene Beschichtung an der Glasoberfläche anhaftet. Die entsprechenden Flachgläser weisen daher einen hohen Gehalt an beweglichen Alkali- und/oder Erdalkalikationen und somit eine hohe lonenmobilität und Ionendiffusion im Glas auf, vorzugsweise ohne dass es im Glas zur Entmischung oder Phasentrennung kommt. Vorzugsweise liegt das Gewichtsverhältnis von SiO₂ und Al₂O₃ zu den Erdalkalimetalloxiden MO im Bereich von 4 bis 9: m(SiO₂)+m(Al₂O₃))/m(MO) = 4 bis 9.

Alternativ oder zusätzlich enthält das Flachglas Alkalimetalloxide. Vorzugsweise beträgt der Gehalt an Alkalimetalloxiden im Bulkbereich des Glases zumindest 1,6 Gew.-%, bevorzugt zumindest 2 Gew.-%. Insbesondere Alkalimetalloxidgehalte im Bereich von 2 bis 15 Gew.-%, bevorzugt im Bereich von 10 bis 15 Gew.-% haben sich als vorteilhaft herausgestellt.

Gemäß einer Ausführungsform enthält das Flachglas Zinkionen. Hierdurch kann eine besonders gute Anhaftung einer zinkoxidhaltigen Beschichtung an das Flachglas erhalten werden. Vorzugsweise beträgt der Gehalt an ZnO im Bulkbereich des Flachglases 1 bis 9, insbesondere 3 bis 7 Gew.-%.

Eine Ausführungsform sieht vor, dass das Flachglas im Bulkbereich folgende Zusammensetzung in Gew.-% aufweist:

| | |
|---|---|
| SiO₂ | 60 bis 70, bevorzugt 62 bis 66 |
| B₂O₃ | 5 bis 10, bevorzugt 7 bis 9 |
| Al₂O₃ | 1 bis 6, bevorzugt 3 bis 6 |
| Na₂O | 4 bis 9, bevorzugt 5 bis 8 |
| K₂O | 4 bis 9, bevorzugt 5 bis 8 |
| ZnO | 3 bis 8, bevorzugt 5 bis 7 |
| TiO₂ | 1 bis 5, bevorzugt 3 bis 5. |

Gemäß einer weiteren Ausführungsform weist das Flachglas im Bulkbereich folgende Zusammensetzung in Gew.-% auf:

| | |
|---|---|
| SiO₂ | 55 bis 70, bevorzugt 58 bis 65 |
| B₂O₃ | 5 bis 15, bevorzugt 8 bis 12 |
| Al₂O₃ | 10 bis 20, bevorzugt 15 bis 19 |
| MgO | 1 bis 5, bevorzugt 1,5 bis 3,5 |
| CaO | 2 bis 6, bevorzugt 4 bis 5,5 |
| BaO | 1 bis 4, bevorzugt 2,5 bis 4. |

Gemäß einer weiteren Ausführungsform weist das Flachglas im Bulkbereich folgende Zusammensetzung in Gew.-% auf:

| | |
|---|---|
| SiO₂ | 65 bis 75, bevorzugt 70 bis 75 |
| B₂O₃ | 15 bis 30, bevorzugt 20 bis 27 |
| Al₂O₃ | 0,8 bis 3, bevorzugt 0,8bis 1,6 |
| Na₂O | 0,8 bis 3, bevorzugt 0,8bis 1,6 |
| K₂O | 0,4 bis 2, bevorzugt 0,4 bis 1 |

Das Flachglas wird gemäß einer Ausführungsform bei der Herstellung vorzugsweise mit einer geringen Kühlrate gekühlt, so dass sich Spannungen im Glas während des Kühlprozesses abbauen können. Gemäß einer Ausführungsform weist das Flachglas somit eine sehr geringe Restspannung auf. Dies ist insbesondere in Hinblick auf die Prozessierbarkeit des Flachglases bei der Verwendung zur Herstellung eines elektrischen Bauteils vorteilhaft. So kommt es beispielsweise bei Laserstrukturierungsprozessen bei Gläsern mit geringen Restspannungen nicht oder nur in geringem Maße zu einer Verformung des Glases. Geringe Restspannungen sind auch bei der Metallisierung des Flachglases vorteilhaft, da das Glas hierbei Temperungsschritten mit Temperaturen von bis zu 500°C ausgesetzt werden kann.

Eine Ausführungsform sieht vor, dass das Flachglas zumindest einen strukturierten Bereich, insbesondere einen strukturierten Bereich, der mit Hilfe eines Laserprozesses erzeugt wurde, enthält. Vorzugsweise enthält das Flachglas eine Vielzahl strukturierter Bereiche. Unter einem strukturierten Bereich wird insbesondere ein Bereich des Flachglases verstanden, in dem das Flachglas gegenüber nicht strukturierten Bereichen veränderte Glaseigenschaften, eine abweichende, insbesondere verringerte Glasdicke und/oder eine Aussparung, vorzugsweise in Form eines Kanals aufweist. Hierbei kann das Glas im strukturierten Bereich bzw. in den strukturierten Bereichen beispielsweise eine durch Einwirken eines Ultrakurzpuls-Lasers (UKP-Laser) veränderte, insbesondere verringerte Festigkeit aufweisen. Bei einem nachfolgenden Ätzprozess ist ein entsprechend strukturierter Bereich mit einer höheren Ätzrate ätzbar als die anderen Bereiche des Flachglases, so dass das Flachglas selektiv im struktrurierten Bereich geätzt wird. Dies ermöglicht die gezielte und ortsgenaue Einbringung von Kanälen in das Flachglas, beispielsweise zur Herstellung von Interposern.

Gemäß einer weiteren Ausführungsform umfasst oder bildet der strukturierte Bereich einen Kanal, der durch Laserfilamentierung in das Flachglas eingebracht wurde. Der Kanal kann dabei als Sackloch ausgebildet sein oder sich in seiner Längsausdehnung über die gesamte Glasdicke des Flachglases erstrecken und durch die beiden Seitenflächen des Flachglases brechen.

Eine weitere Ausführungsform sieht vor, dass das Flachglas auf zumindest einer Oberfläche eine zinkoxid- und/oder zinnoxidhaltige Beschichtung aufweist. Die zinkoxid- und/oder zinnoxidhaltige Beschichtung eignet sich insbesondere als Haftvermittlerschicht zwischen dem Flachglas und einer metallischen Beschichtung und wird daher im Rahmen der vorliegenden Offenbarung auch als haftvermittelnde Schicht oder Haftvermittlerschicht bezeichnet.

Gemäß einer Ausführungsform weist das Flachglas neben einer zinnoxid- und/oder zink- oxidhaltigen, haftvermittelnden Schicht eine metallische Beschichtung, vorzugsweise eine kupferhaltige Beschichtung auf. Die haftvermittelnde Schicht ist dabei zwischen der Oberfläche des Flachglases und der metallischen Beschichtung aufgebracht. Vorzugsweise bildet sich auch zwischen der haftvermittelnden Schicht und der metallischen Schicht eine Interdiffusionsschicht, indem Zinn- bzw. Zinkionen in die metallische Schicht diffundieren. Dies führt zu einer besonders guten Anhaftung der metallischen Schicht an der zinkoxid- und/oder zinnoxidhaltigen Haftvermittlerschicht.

Vorzugsweise umfasst das Flachglas strukturierte Bereiche, wobei insbesondere zumindest die strukturierten Bereiche mit der metallischen Beschichtung beschichtet sind.

Vorzugsweise weist eine auf dem Flachglas abgeschiedene Beschichtung umfassend eine zinnoxid- oder zinkoxidhaltige Haftvermittlerschicht sowie eine metallische, vorzugsweise kupferhaltige Beschichtung eine Peel-off-strength von zumindest 4 N/cm auf. Hierbei ist die Peel-off-strength ein Maß für die Adhäsionskraft, mit der verschiedene Materialien miteinander verbunden sind. Bei der Bestimmung der Peel-off-strength werden die Materialien mit einer konstanten Geschwindigkeit auseinandergezogen. Hierbei wird die Kraft, die zur Separation der Materialien notwendig ist in Abhängigkeit von der Größe der gemeinsamen Oberfläche berechnet.

Das offenbarte Flachglas eignet sich zur Verwendung in einem elektronischen Bauteil, beispielsweise in einem TGV-Interposer und/oder zur Verwendung bei der Herstellung eines entsprechenden elektronischen Bauteils. Die Erfindung soll nachfolgend anhand der Figuren und ohne Beschränkung hierauf eingehender beschrieben werden. Gleiche Bezugszeichen bezeichnen dabei gleiche oder ähnliche Elemente.

Es zeigen:
Fig. 1 einen schematischen Querschnitt durch ein Flachglas,
Fig. 2 einen schematischen Querschnitt durch ein Flachglas mit Interdiffusionsschicht,
Fig. 3 ein TOF-SIM-Massenspektrum zweier Ausführungsbeispiele sowie eines Vergleichsbeispiels,
Fig. 4 einen schematischen Querschnitt durch ein Flachglas mit zinkoxidhaltiger Beschichtung gemäß einer Ausführungsform,
Fig. 5 einen schematischen Querschnitt durch ein Flachglas mit zinkoxidhaltiger Beschichtung und metallischer Beschichtung gemäß einer weiteren Ausführungsform,
Fig. 6 einen schematischen Querschnitt durch ein strukturiertes Flachglas und
Fig. 7, Fig. 8 schematischen Querschnitte eines strukturierten Flachglases mit metallischer Beschichtung gemäß zweier Ausführungsbeispiele.

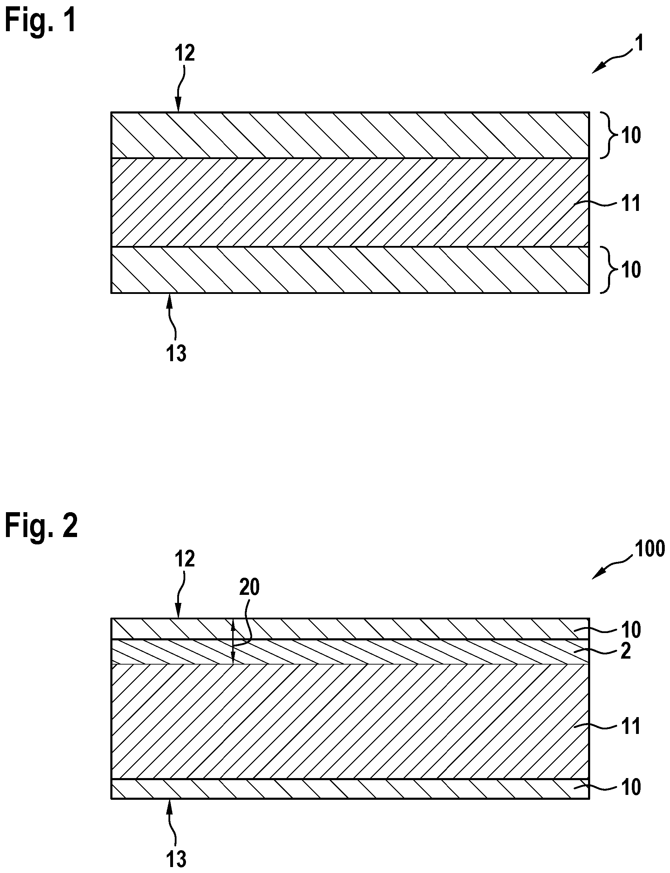

Fig. 1 zeigt einen schematischen Querschnitt durch ein Flachglas 1 mit den beiden Seitenflächen 12, 13. Die oberflächennahen Bereiche 10 erstrecken sich von den Seitenflächen 12, 13 bis zu einer Tiefe von 20 nm ins Innere des Flachglases 1. Der Mittenbereich des Flachglases wird auch als Bulkbereich 11 bezeichnet.

In Fig. 2 wird schematisch ein Flachglas 100 im Querschnitt dargestellt, das an der Seitenfläche 12 eine Interdiffusionsschicht 2 aufweist. Die Schichtdicke 20 dieser Interdiffusionsschicht 2 geht hierbei über den oberflächennahen Bereich 10 hinaus. Das in Fig. 2 dargestellte Ausführungsbeispiel weist in der Interdiffusionsschicht 2 eine höhere Konzentration an Zinkionen auf als im Bulkbereich 11 des Flachglases 100. Das Flachglas 10 weist somit in der Interdiffusionsschicht 2 bezogen auf die Zinkionenkonzentration eine Konzentrationsüberhöhung gegenüber dem Bulkbereich 11 auf. Zur Erzeugung der Interdiffusionsschicht 2 wurde die Seitenfläche 12 des Flachglases 100 in Kontakt mit einer Lösung eines Zinksalzes gebracht. Hierzu wurde das Flachglas 100 bei einer Temperatur von 580 °C für eine Zeitdauer von 8 h eine Salzschmelze umfassend 70 Gew.-% ZnSO₄x7H₂O und 30% K₂SO₄ gegeben.

Hierbei findet im Glas ein Ionenaustausch statt, bei dem bewegliche Metallkationen wie beispielsweise Alkali- oder Erdalkalimetallkationen durch Zinkionen aus der Schmelze ersetzt werden. Die Schichtdicke 20 der Interdiffusionsschicht 2 entspricht dem 90%-Point-to-Point-Wert der Zinkkonzentration im Glas und ist größer als 40 nm. Unter dem 90%-Point-to-Point-Wert wird dabei die Glastiefe ausgehend von der Seitenfläche 12 verstanden, bei der die Zinkkonzentration gegenüber der Konzentration auf der Oberfläche der Seitenfläche 12 um 90% reduziert wurde. Der Konzentrationsverlauf der Zinkionen im Glas wird hierbei durch TOF-SIM-Massenspektrometrie ermittelt. Der 50%-Point- to-Point-Wert entspricht entsprechend der Glastiefe ausgehend von der Seitenfläche 12, bei der die Zinkkonzentration halb so groß ist wie an der Oberfläche des Glases an der Seitenfläche 12.

Tabelle 1 zeigt die Zusammensetzung zweier Ausführungsbeispiele 1 und 2 sowie des-Vergleichsbeispiels. Die Zusammensetzung bezieht sich dabei auf den Bulkbereich des jeweiligen Flachglases und wird in Gew.-% angegeben.

**Tabelle 1: Glaszusammensetzungen**

| | Ausführungsbeispiel 1 | Ausführungsbeispiel 2 | Vergleichsbeispiel |
|---|---|---|---|
| SiO₂ | 64,10 | 61,15 | 80,80 |
| B₂O₃ | 8,40 | 10,50 | 12,70 |
| Al₂O₃ | 4,20 | 17,45 | 2,40 |
| Na₂O | 6,40 | | 3,50 |
| K₂O | 6,90 | | 0,6 |
| MgO | | 2,8 | |
| CaO | | 4,7 | |
| SrO | | | |
| BaO | | 3,2 | |
| ZnO | 5,90 | | |
| TiO₂ | 4,10 | | |

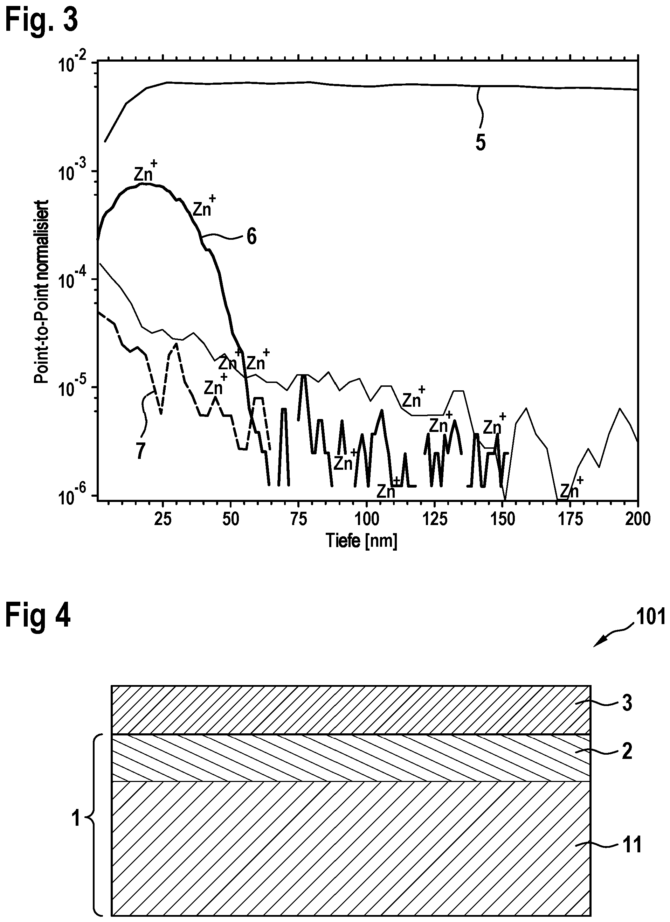

Die Flachgläser der beiden Ausführungsbeispiele und das Flachglas des Vergleichsbeispiels wurden hierbei wie oben beschrieben in die Lösung eines Zinksalzes getaucht. Nach dem Ionenaustausch wurde die Oberfläche der Flachgläser gereinigt und der Verlauf der Zinkkonzentration in den Flachgläsern mittels ToF-SIMS-Massenspektrometrie bestimmt. Die entsprechenden ToF-SIMS-Spektren werden in Fig. 3 gezeigt, wobei die Kurve 5 dem Zinkkonzentrationsverlauf im Ausführungsbeispiel 1, Kurve 6 dem Zinkkonzentrationsverlauf im Ausführungsbeispiel 2 und Kurve 7 dem Zinkionen- konzentrationsverlauf des Vergleichsbeispiels zuzuordnen ist.

Aus Fig. 3 wird deutlich, dass die Gläser beider Ausführungsbeispiele 1 und 2 auch in Glastiefen von mehr als 40 nm signifikante Zinkgehalte aufweisen. Das Konzentrationsprofil 6 des Ausführungsbeispiels 2 ist hierbei auf einen Ionenaustausch der Erdalkalimetalloxid gegen Zinkionen zurückzuführen. Beide Gläser zeigen somit eine guten lonentauschbarkeit.

Bei Ausführungsbeispiel 2 kann dies auch auf den hohen Anteil an Erdalkalioxiden MO und somit an beweglichen, zweifach positiv geladenen Kationen in Verbindung mit den vorteilhaften Gehalten an SiO₂ und Al₂O₃ zurückgeführt werden. So weist das Glas des Ausführungsbeispiels 2 ein Verhältnis (m(SiO₂)+m(Al₂O₃))/m(MO) von 7,3 auf.

Das Glas des Ausführungsbeispiels 1 enthält keine Erdalkalimetallionen. Hier können jedoch Alkalimetallionen gegen Zinkionen ausgetauscht werden. Auch das Glas des Ausführungsbeispiels 1 zeigt dabei ein vorteilhaftes Verhältnis von SiO₂ und Al₂O₃ zu Netzwerkwandlern, die in diesem Beispiel Alkalimetalloxidionen sind. Für das Verhältnis von SiO₂ und Al₂O₃ zu den Netzwerkwandlern gilt hierbei $\left(m\left({SiO}_{2}\right)+m\left({Al}_{2}{O}_{3}\right)\right) / \left(m\left({M}_{2}O\right)+m\left(MO\right)\right) = 5,1 .$

Beim Vergleichsbeispiel (7) hat dabei trotz des relativ hohen Gehaltes an Alkalimetalloxiden kein signifikanter Ionenaustauch mit Zinkionen stattgefunden. Es kann vermutet werden, dass in diesem Glas die lonenmobilität durch den hohen Anteil an SiO₂ verringert wird. So weist das Glas des Vergleichsbeispiels ein deutlich größeres Verhältnis von SiO₂ und Al₂O₃ zu den Netzwerkwandlern auf: $\left(m\left({SiO}_{2}\right)+m\left({Al}_{2}{O}_{3}\right)\right) / \left(m\left({M}_{2}O\right)+m\left(MO\right)\right) = 20 , 3 .$

Fig. 4 zeigt eine schematische Darstellung einer Weiterbildung gemäß eines weiteren Ausführungsbeispiels, bei dem das Flachglas 1 mit einer Zinkoxidschicht 3 beschichtet ist. Das Glas 1 weist ausgehend von der beschichten Seitenfläche eine Interdiffusionszone 2 auf. In dieser Interdiffusionszone 2 weist das Glas einen höheren Zinkgehalt aus als im Bulkbereich 11, wobei die Zinkkonzentration mit zunehmender Glastiefe abnimmt. Dieser Konzentrationsgradient des Zinks kann auf eine Diffusion der Zinkionen aus der Beschichtung 3 in das Glas 1 unter den Prozessbedingungen zum Aufbringen der Beschichtung 3 zurückgeführt werden und führt zu einer Verbesserung der Anhaftung der Zinkoxidbeschichtung 3 auf dem Glas.

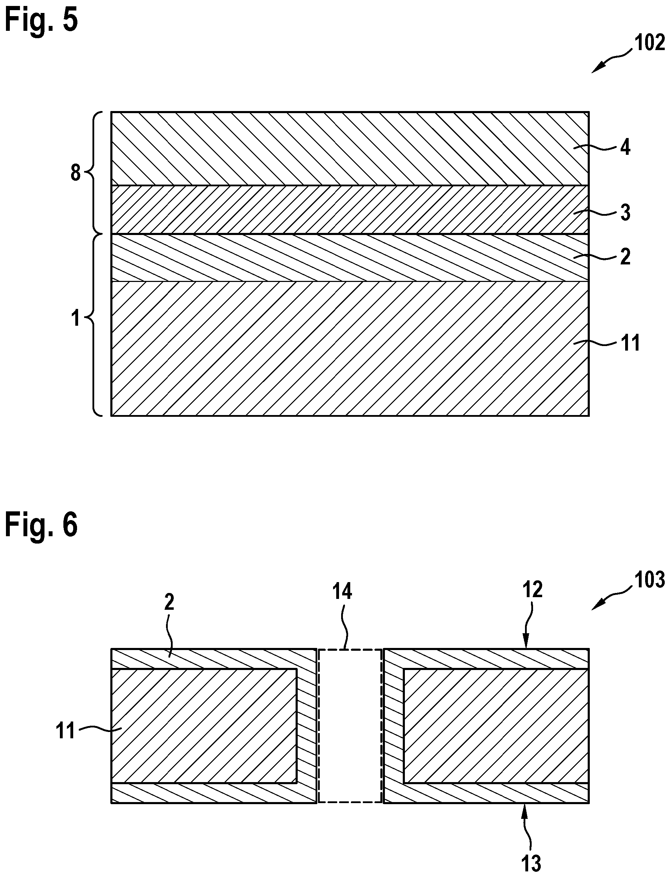

Fig. 5 zeigt ein Ausführungsbeispiel, bei dem das Flachglas 1 eine Beschichtung 8 umfassend eine zinkoxidhaltige Haftvermittlerschicht 3 sowie eine metallische Schicht 4 aufweist. In dem in Fig. 5 dargestellten Ausführungsbeispiel handelt es sich bei der metallischen Schicht 4 um eine Kupferschicht. Die zinkoxidhaltige Haftvermittlerschicht 3 ist zwischen dem Flachglas 1 und der metallischen Schicht 4 angeordnet. Analog zu dem in Fig. 4 gezeigten Ausführungsbeispiel weist das Flachglas eine Interdiffusionsschicht 2 auf, in der die Konzentration an Zinkionen größer ist als im Bulkbereich 11. Die Peel-off-strength der Beschichtung 8 ist hierbei größer als 4 N/cm.

Fig. 6 zeigt ein Ausführungsbeispiel eines strukturierten Flachglases 103. Das Flachglas 103 weist hierbei einen strukturierten Bereich 14 auf. Dieser ist im dargestellten Ausführungsbeispiel als Kanal ausgebildet, der sich von einer Seitenfläche 12 des Flachglases 103 zur gegenüberliegenden Seitenfläche 13 erstreckt. Der strukturierte Bereich 14 kann insbesondere in einem Laserstrukturierungsprozess mit einem nachfolgenden Ätzvorgang erzeugt werden. Hierbei wird zunächst im Flachglas ein Bereich mit verringerter mechanischer Festigkeit erzeugt. Durch die verringerte mechanische Festigkeit kann bei einem nachfolgenden Ätzprozess die Ätzrate in diesem laserstrukturierten Bereich größer sein als in nicht strukturierten Bereichen des Flachglases 103, so dass das Flachglas 1 selektiv oder zumindest verstärkt in den strukturierten Bereichen 14 geätzt wird und so entsprechende Strukturen, beispielsweise in Form von Kanälen, erzeugt werden. Das in Fig. 6 dargestellte Flachglas 103 wurde einem Ionenaustausch mit einer Schmelze umfassend ein Zinksalz, vorzugsweise ZnSO₄, unterzogen und weist daher sowohl an den Seitenflächen 12, 13 als auch an den Kanten des strukturierten Bereichs 14 Interdiffusionsbereiche 2 auf, in denen die Zinkkonzentration größer ist als im Bulkbereich 11.

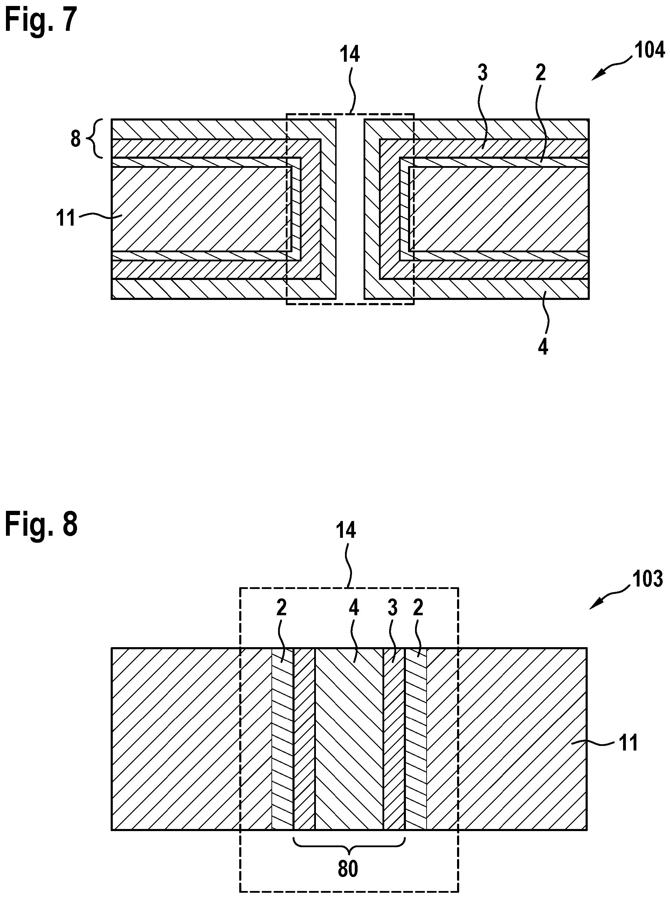

In Fig. 7 wird schematisch ein Ausführungsbeispiel dargestellt, bei dem das strukturierte Flachglas 104 eine Beschichtung 8 umfassend eine zinkoxidhaltige Haftvermittlerschicht 3 sowie eine metallische, kupferhaltige Schicht 4 aufweist. In dem in Fig. 7 gezeigten Ausführungsbeispiel sind alle Oberflächen 12, 13 des Flachglases mit der Beschichtung 8 versehen. Die metallische Beschichtung 4 weist somit keinen direkten Kontakt mit der Glasoberfläche auf.

Aus der zinkoxidhaltigen Schicht 3 sind beim Beschichtungsprozess Zinkionen in das Glas diffundiert, so dass das Flachglas 1 in den Interdiffusionsbereichen 2 ein höhere Zinkkonzentration aufweist als im Bulkbereich 11. Die Beschichtung weist eine Peel-off-strength von mehr als 4 N/cm auf. Die gute Anhaftung der Beschichtung 8 ist hierbei insbesondere auf die Interdiffusionsschicht 2 im Flachglas 103 und die damit verbundene, gute Adhäsion der zinkoxidhaltigen Haftvermittlerschicht 3 auf der Glasoberfläche zurückzuführen.

Die Beschichtung des Flachglases kann jedoch auch nur in Teilbereichen, insbesondere nur in dem oder den strukturierten Bereichen 14, erfolgen. Ein entsprechendes Ausführungsbeispiel ist schematisch in Fig. 8 dargestellt. Hier ist das Flachglas 105 nur im Bereich der Wandungen des strukturierten Bereichs 14 mit einer Beschichtung 80 versehen. Die Beschichtung 80 umfasst sowohl eine zinkoxidhaltige Haftvermittlerschicht 3 als auch eine metallische Schicht 4. Die Schichtdicke der Beschichtung 80 wird dabei so eingestellt, dass der strukturierte Bereich 14 vollständig von der Beschichtung 80 ausgefüllt wird. Die Beschichtung 80 erstreckt sich somit über das gesamte Volumen des strukturierten Bereichs 14, wobei zwischen der metallischen Beschichtung 4 und den Glasoberflächen stets eine Haftvermittlerschicht 3 angeordnet ist.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1, 100: Flachglas
- 2: Interdiffusionsschicht
- 3: Haftvermittlerschicht
- 4: metallische Beschichtung
- 5, 6,7: TOF-SIMS-Messkurven
- 8, 80: Beschichtung mit 3, 4
- 10: oberflächennaher Bereich
- 11: Bulkbereich
- 12, 13: Seitenflächen
- 14: strukturierter Bereich
- 20: Austauschtiefe
- 101, 102: beschichtetes Flachglas
- 103: strukturiertes Flachglas
- 104, 105: strukturiertes Flachglas mit metallischer Beschichtung

## Patentansprüche

1. Flachglas (1, 100) aus einem Mehrkomponentenglas, insbesondere geeignet zur Herstellung eines elektronischen Bauteils, umfassend zwei gegenüberliegende Seitenflächen (12, 13) sowie einen Bulkbereich (11), wobei das Flachglas (1, 100) nach Behandlung mit einer Salzschmelze umfassend 70 Gew.-% ZnSO₄x7H₂O und 30 Gew.- % K₂SO₄ bei 580°C für 8 h für Zinkionen einen 90% Point to Point-Wert (PtP) > 40 nm aufweist.

2. Flachglas (1, 100) aus einem Mehrkomponentenglas gemäß dem vorstehenden Anspruch, umfassend zwei gegenüberliegende Seitenflächen (12, 13) sowie einen Bulkbereich (11), wobei das Flachglas in zumindest einem oberflächennahen Bereich (10) vorzugsweise in einem Bereich bis zu einer Tiefe von zumindest 25 nm eine Konzentrationsüberhöhung von Zink oder Zinn gegenüber dem Bulkbereich (11) aufweist, wobei bevorzugt die Konzentration von Zink oder Zinn in dem zumindest einem oberflächennahen Bereich (10) gegenüber dem Bulkbereich (11) zumindest 50% höher ist als im Bulkbereich.

3. Flachglas (1, 100) gemäß einem der vorstehenden Ansprüche, wobei das Flachglas (1, 100) nach Behandlung mit einer Salzschmelze umfassend 70 Gew.-% ZnSO₄x7H₂O und 30 Gew.-% K₂SO₄ bei 580°C für 8 h für Zinkionen einen 90% Point- to-Point-Wert von zumindest 50 nm und/oder einen 50% Point-to-Point-Wert von mehr als 25 nm, bevorzugt mehr als 35 nm aufweist.

4. Flachglas (1, 100) gemäß einem der vorstehenden Ansprüche, wobei das Flachglas (1, 100) im Bulkbereich (11) einen Gehalt an SiO₂ von höchstens 75 Gew.-%, einen Gehalt an Al₂O₃ von zumindest 0,8 Gew.-%, einen Gesamtgehalt an Erdalkalimetalloxiden und Alkalimetalloxiden von zumindest 1,6 Gew.-% aufweist.

5. Flachglas (1, 100) gemäß einem der vorstehenden Ansprüche, wobei das Flachglas (1, 100) im Bulkbereich (11) einen Gesamtgehalt an SiO₂ von höchstens 75 Gew.-%, bevorzugt im Bereich von 55 bis 75 Gew.-% und besonders bevorzugt im Bereich von 58 bis 65 Gew.-% aufweist.

6. Flachglas (1, 100) gemäß einem der vorstehenden Ansprüche, wobei der Gesamtanteil an Alkalimetalloxiden und Erdalkalimetalloxiden im Bereich von 1,6 bis 25 Gew.-%, bevorzugt im Bereich von 8 bis 15 Gew.-% liegt.

7. Flachglas (1, 100) gemäß einem der vorstehenden Ansprüche, wobei das Flachglas (1, 100) einen Gehalt an Erdalkalimetalloxiden von zumindest 3 Gew.-%, bevorzugt im Bereich von 4 bis 15 Gew.-%, besonders bevorzugt im Bereich von 8 bis 12 Gew.-% und/oder einen Gehalt an Alkalimetalloxiden von zumindest 1,6 Gew.-%, bevorzugt im Bereich von 2 bis 15 Gew.-% und besonders bevorzugt im Bereich von 10 bis 15 Gew.- % aufweist

8. Flachglas (1, 100) gemäß einem der vorstehenden Ansprüche, wobei das Flachglas (1, 100) im Bulkbereich (11) Zinkoxid aufweist und der Gehalt an Zinkoxid bevorzugt im Bereich von 1 bis 9 Gew.-%, besonders bevorzugt im Bereich von 3 bis 7 Gew.-% liegt.

9. Flachglas (1, 100) gemäß einem der vorstehenden Ansprüche 2 bis 7, wobei für das Verhältnis der Gewichtsanteile an SiO₂ und Al₂O₃ und der Gewichtsanteile Alkalimetalloxiden M₂O und Erdalkalimetalloxiden MO im Bulkbereich (11) des Glases gilt: $\left(m\left({SiO}_{2}\right)+m\left({Al}_{2}{O}_{3}\right)\right) / \left(m\left({M}_{2}O\right)+m\left(MO\right)\right) \geq 4 ,$ bevorzugt 4 bis 8.

10. Flachglas (1, 100) gemäß einem der vorstehenden Ansprüche, wobei das Glas im Bulkbereich (11) folgende Zusammensetzung in Gew.-% aufweist:
| | |
|---|---|
| SiO₂ | 60 bis 70, bevorzugt 62 bis 66 |
| B₂O₃ | 5 bis 10, bevorzugt 7 bis 9 |
| Al₂O₃ | 1 bis 6, bevorzugt 3 bis 6 |
| Na₂O | 4 bis 9, bevorzugt 5 bis 8 |
| K₂O | 4 bis 9, bevorzugt 5 bis 8 |
| ZnO | 3 bis 8, bevorzugt 5 bis 7 |
| TiO₂ | 1 bis 5, bevorzugt 3 bis 5. |

11. Flachglas (1, 100) gemäß einem der vorstehenden Ansprüche 1 bis 9, wobei das Glas im Bulkbereich (11) folgende Zusammensetzung in Gew.-% aufweist:
| | |
|---|---|
| SiO₂ | 55 bis 70, bevorzugt 58 bis 65 |
| B₂O₃ | 5 bis 15, bevorzugt 8 bis 12 |
| Al₂O₃ | 10 bis 20, bevorzugt 15 bis 19 |
| MgO | 1 bis 5, bevorzugt 1,5 bis 3,5 |
| CaO | 2 bis 6, bevorzugt 4 bis 5,5 |
| BaO | 1 bis 4, bevorzugt 5 bis 7 |

12. Flachglas (1, 100) gemäß einem der vorstehenden Ansprüche 1 bis 9, wobei das Glas im Bulkbereich (11) folgende Zusammensetzung in Gew.-% aufweist:
| | |
|---|---|
| SiO₂ | 65 bis 75, bevorzugt 70 bis 75 |
| B₂O₃ | 15 bis 30, bevorzugt 20 bis 27 |
| Al₂O₃ | 0,8 bis 3, bevorzugt 0,8 bis 1,6 |
| Na₂O | 0,8 bis 3, bevorzugt 0,8 bis 1,6 |
| K₂O | 0,4 bis 2, bevorzugt 0,4 bis 1 |

13. Flachglas (101) gemäß einem der vorstehenden Ansprüche, wobei das Flachglas (102) auf zumindest einer Oberfläche (12, 13) eine zinkoxid- und/oder zinnoxidhaltige Beschichtung (3) aufweist.

14. Flachglas (102, 104,105) gemäß einem der vorstehenden Ansprüche, wobei auf dem Flachglas (102, 104, 105) eine Beschichtung (8, 80) umfassend eine zinkoxid- und/oder zinnoxidhaltige Schicht (3) und eine metallische Schicht (4) aufgebracht ist, wobei die zinkoxid- oder zinnoxidhaltige Schicht (3) zwischen dem Flachglas (102, 103) und der metallischen Schicht (4) angeordnet ist und die Beschichtung (8, 80) bevorzugt eine Peel-off-strength von zumindest 4 N/cm aufweist.

15. Flachglas (103, 104, 105) gemäß einem der vorstehenden Ansprüche, wobei das Flachglas (10, 104, 105) zumindest einen strukturierten Bereich (14), bevorzugt einen mittels Laserstrukturierung eingebrachten strukturierten Bereich aufweist.

16. Verwendung eines Flachglases (1, 100, 101, 102, 103, 104, 105) gemäß einem der vorstehenden Ansprüche zur Herstellung eines elektronischen Bauteils, bevorzugt zur Herstellung eines TGV-Interposers.

17. Verwendung eines Flachglases (1, 100, 101, 102, 103, 104, 105) gemäß einem der vorstehenden Ansprüche 1 bis 15 in einem elektronischen Bauteil.
